# EUROPEAN PATENT APPLICATION

(11) **EP 2 081 340 A2**
(43) Date of publication of application: **22.07.2009**
(21) Application number: 08022387.8
(22) Date of filing: 23.12.2008
(51) Int. Cl.: H04L 25/06

(54) **Adapting quantization steps using average CQI for HS-SCCH decoding**

(30) Priority: 15.01.2008 US 21229 P; 29.10.2008 US 260647
(71) Applicant: Broadcom Corporation, Irvine California 92617-3038 (US)
(72) Inventor: Ly, Khoi, San Diego, CA 92126 (US); Prasad, Abhinav, Woodbridge, NJ 07095 (US); Sollenberger, Nelson, Farmingdale, NJ 07727 (US); Chang, Li Fung, Holmdel, NJ 07733 (US); Wu, Jun, San Diego, CA 92127 (CA)
(74) Representative: Jehle, Volker Armin

(57) **Abstract**

Aspects of a method and system for adaptive quantization steps for HS-SCCH decoding using average CQI are provided. A HS-SCCH in a received HSDPA signal may be adaptively quantized before HS-SCCH decoding occurs. Quantization information may be determined based on a CQI value associated with the HS-PDSCH. A preferred soft bit precision and quantization geometry, which associated with the quantization information, for the given soft bit precision may be determined based on the CQI value. The received HS-SCCH data may be truncated with the determined soft bit precision in the determined quantization geometry, accordingly. A look-up table, which may comprise the mappings between CQI and quantization step information, may be used for selecting quantization step sizes in HS-SCCH quantizing in order to, for example, lower the complexity in HS-SCCH quantizing.

## Description

### CROSS-REFERENCE TO RELATED APPLICATIONS/INCORPORATION BY REFERENCE

This patent application makes reference to, claims priority to and claims benefit from United States Provisional Patent Application Serial No. 61/021,229 filed on January 15, 2008.

The above stated application is hereby incorporated herein by reference in its entirety.

### FIELD OF THE INVENTION

Certain embodiments of the invention relate to signal processing for communication systems. More specifically, certain embodiments of the invention relate to a method and system for adaptive quantization steps for HS-SCCH decoding using average CQI.

### BACKGROUND OF THE INVENTION

Wideband Code Division Multiple Access (WCDMA) mobile wireless systems have enjoyed widespread uptake of high-quality circuit-switched applications like voice and video telephony. However, they have yet to deliver to the vision of a truly ubiquitous mobile data primarily due to the absence of an efficient high-speed-packet-switched data transmission platform. Data services like mobile Internet access require asymmetric packet switched networks to best utilize the available spectrum in a multiuser environment.

High-speed downlink packet access (HSDPA) is a packet-based data service in W-CDMA downlink with theoretical peak data rates of up to 14.4Mbps by utilizing adaptive modulation and coding (AMC), hybrid ARQ (HARQ), and fast MAC scheduling. HSDPA offers high-speed downlink shared channels (HS-DSCH) that may be shared efficiently between multiple users. Using these channels, HSDPA systems may provide excellent packet-switched data services to several users simultaneously and efficiently.

To implement the HSDPA feature, three new physical channels, High Speed physical Downlink-Shared Channel (HS-PDSCH), High-speed Shared Control Channel (HS-SCCH), and Uplink High-Speed Dedicated Physical Control Channel (HS-DPCCH), are introduced in the physical layer specifications to enable HS-DSCH transmission. The HS-SCCH is a downlink control channel that is utilized to inform the mobile devices when HSDPA data carried over the HS-PDSCH is scheduled for them, and how they may receive and decode the HSDPA data. Up to four HS-SCCH may be observed for each mobile device. The mobile devices needs to decode the HS-SCCH that carries control information such as modulation scheme, number of physical channels, transport block format, and HARQ information, for HS-PDSCH before it gets decoded on the HS-PDSCH. The HS-DPCCH is an uplink control channel used by the mobile devices to report the downlink channel quality and/or request packet retransmissions.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for adaptive quantization steps for HS-SCCH decoding using average CQI, substantially as shown in and/or described in connection with at least one of the figures, as set forth more completely in the claims.
According to an aspect, a method for processing signals in a communication system is provided, the method comprising:
receiving a wireless signal and a corresponding control signal;
determining a quantization step for said control signal based on channel quality information for said wireless signal; and
quantizing said control signal based on said determination prior to decoding said control signal.
Advantageously, said received wireless signal comprises a High-Speed Downlink Packet Access (HSDPA) signal.
Advantageously, said received wireless signal comprises a high-speed physical downlink-shared channel (HS-PDSCH) signal and said control signal comprises a high-speed shared control channel (HS-SCCH) signal.
Advantageously, said channel quality information specifies a channel quality indicator (CQI) value for said received wireless signal.
Advantageously, the method further comprises determining a soft bit precision for said control signal based on said channel quality information.
Advantageously, the method further comprises determining a quantization geometry for said determined soft bit precision based on said channel quality information.
Advantageously, the method further comprises selecting a portion of said control signal for processing based on said determined quantization geometry for said determined soft bit precision.
Advantageously, the method further comprises truncating said control signal based on said determined quantization geometry for said determined soft bit precision.
Advantageously, the method further comprises processing said received wireless signal based on said quantization of said control.
Advantageously, the method further comprises determining said quantization step via a look-up table, wherein said look-up table comprises mappings between channel quality information and quantization step information.
According to an aspect, a system for signal processing comprises:
one or more circuits operable to receive a wireless signal and a corresponding control signal;
said one or more circuits operable to determine a quantization step for said control signal based on channel quality information for said wireless signal; and
said one or more circuits operable to quantize said control signal based on said determination prior to decoding said control signal.
Advantageously, said received wireless signal comprises a High-Speed Downlink Packet Access (HSDPA) signal.
Advantageously, said received wireless signal comprises a high-speed physical downlink-shared channel (HS-PDSCH) signal and said control signal comprises a high-speed shared control channel (HS-SCCH) signal.
Advantageously, said channel quality information specifies a channel quality indicator (CQI) value for said received wireless signal.
Advantageously, said one or more circuits are operable to determine a soft bit precision for said control signal based on said channel quality information.
Advantageously, said one or more circuits are operable to determine soft bit precision based on said channel quality information.
Advantageously, said one or more circuits are operable to select a portion of said control signal for processing based on said determined quantization geometry for said determined soft bit precision.
Advantageously, said one or more circuits are operable to truncate said control signal based on said determined quantization geometry for said determined soft bit precision.
Advantageously, said one or more circuits are operable to process said received wireless signal based on said quantization of said control.
Advantageously, said one or more circuits are operable to determine said quantization step via a look-up table, wherein said look-up table comprises mappings between channel quality information and quantization step information.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG.1 is a diagram of an exemplary HSDPA enabled communication system, in accordance with an embodiment of the invention.

FIG.2 is a block diagram illustrating an exemplary HSDPA receiver, in accordance with an embodiment of the invention.

FIG.3 is a block diagram illustrating an exemplary HS-SCCH quantizer, in accordance with an embodiment of the invention.

FIG.4 is a flow chart illustrating exemplary quantization of received HS-SCCH data with adaptive HS-SCCH quantization step sizes based on CQI information, in accordance with an embodiment of the invention.

### DETAILED DESCRIPTION OF THE INVENTION

Certain embodiments of the invention may be found in a method and system for adaptive quantization steps for HS-SCCH decoding using average CQI. Various aspects of the invention may enable processing of a HSDPA signal comprising a HS-PDSCH, one or more HS-SCCH, and a CPICH. The HS-SCCH may be adaptively quantized before it is HS-SCCH decoded. A quantization step size may be determined based on channel quality information, which may be indicated by a CQI value associated with the HS-PDSCH. A preferred soft bit precision and quantization geometry for the given soft bit precision may also be determined based on the CQI value. The received HS-SCCH data may be truncated based on the determined soft bit precision in the determined quantization geometry, accordingly. In accordance with an embodiment of the invention, for the HS-SCCH quantization, a look-up table, which may comprise mappings between a CQI and quantization step sizes indicated by soft bit precisions and respective quantization geometry, may be used for selecting quantization step sizes in HS-SCCH quantizing.

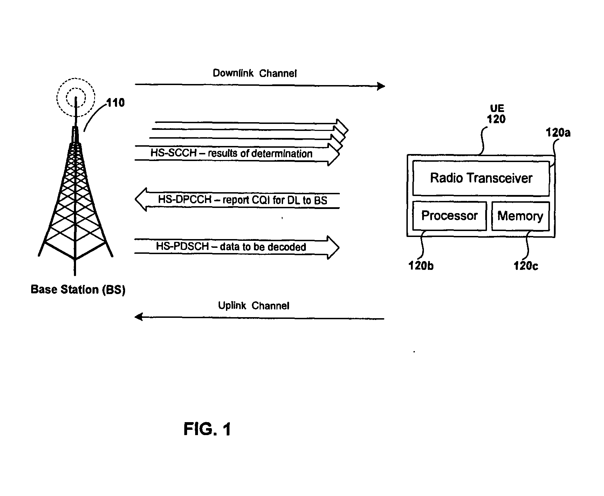

FIG.1 is a diagram of an exemplary HSDPA enabled communication system, in accordance with an embodiment of the invention.. Referring to FIG. 1, there is shown a base station 110 and a user equipment (UE) 120 comprising a radio transceiver 120a, a processor 120b, and a memory 120c.

The base station 110 may comprise suitable logic, circuitry and/or code that may enable air interface processing and scheduling of communication resources in both uplink and downlink to various UEs in a timely manner. The base station 110 may support HSDPA and other downlink technologies. Various algorithms may be used in the base station 110 to determine which UE may receive a data packet and at what time the receiving should occur. In instances where HSDPA may be active, results of the determination may be reported to, for example, the UE 120, via a High Speed Shared Control Channel (HS-SCCH). The base station 110 may receive messages over the Uplink High-Speed Dedicated Physical Control Channel (HS-DPCCH) from the UE 120 regarding the corresponding downlink channel quality information (CQI) and/or packet retransmission. Depending on the quality of the downlink channel reported from the UE 120, the base station 110 may select a suitable modulation and coding for the data packet delivered to the UE 120. Various exemplary modulation types such as QPSK (quadrature phase shift keying) and 16QAM (quadrature amplitude modulation) may be supported for the transmissions from the base station 110.

The UE 120 may comprise suitable logic circuitry and/or code that may be enabled to receive and/or transmit radio frequency signals from and/or to the base station 110, utilizing for example, HSDPA. The UE 120 may be enabled to perform, for example, baseband signal processing in the processor 120b. The processor 120b may comprise suitable logic, circuitry and/or code that may be enabled to perform a variety of signal processing tasks and may comprise controlling of the radio transceivers 120a, for example. The memory 120c may comprise suitable logic, circuitry and/or code that may be enabled to store data and/or code that may be accessed by the processor 120b and/or the radio transceivers 120a. Various algorithms, for example, channel coding algorithms, for baseband signal processing may be stored in the memory 120c. The radio transceiver 120a may comprise suitable logic, circuitry and/or code that may be enabled to generate RF signals and intermediate frequency (IF) signals from baseband signals, which may be communicated from the processor 120b, in accordance with a radio frequency technology and/or standard such as HSDPA.

In HSDPA reception, the processor 120b of the UE 120 may need to decode the HS-SCCH for control information such as the number of codes, new data indicator, and modulation type (QPSK or 16QAM), prior to decoding data over the HS-PDSCH. The HS-SCCH needs to be decoded properly with high reliability in order to optimize system throughput. An ideal HS-SCCH decoding may work on HS-SCCH data with infinite precision, or at least with floating-point precision. A high number of quantization steps may result in an increased complexity of the digital circuitry used in HS-SCCH decoding. However, utilizing a low number of quantization steps may result in performance degradation in HS-SCCH decoding. In order to reduce the complexity of the HS-SCCH decoding, the soft bit precision of the received HS-SCCH data may be reduced before decoding of the HS-SCCH occurs. In this regard, the UE 120 may be enabled to evaluate the channel quality conditions, indicated by the CQI values, and determine quantization step sizes based on the corresponding channel conditions. The quantization step sizes may be adjusted in a way to accommodate dynamic ranges of the receive HS-SCCH signal strength and minimize the HS-SCCH quantization errors to accurately represent the received HS-SCCH data.

In operation, the UE 120 may receive HSDPA data from the base station 110 via the radio transceiver 120a. The processor 120b of the UE 120 may decode the HS-SCCH prior to HS-PDSCH decoding by using a coding algorithm stored in the memory 120c. The decoded HS-SCCH may provide control information such as the channelization codes and modulation type for the HS-PDSCH. The processor 120b may determine the channel quality information associated with the received HSDPA data for processing HS-SCCH. The received HS-SCCH data may be quantized by adaptively adjusting quantization step sizes based on the corresponding channel quality information, prior to HS-SCCH decoding. The control information for the HS-PDSCH may be extracted from the decoded HS-SCCH to be used for HS-PDSCH decoding. The decoded HS-PDSCH data may provide HS-PDSCH transport data blocks and/or feedback information such as channel quality information and/or packet retransmission to the base station 110. The base station 110 may select transmission parameters such as modulation type and/or packet retransmission based on the feedback information received from the UE 120 for next HSDPA data transmission, accordingly.

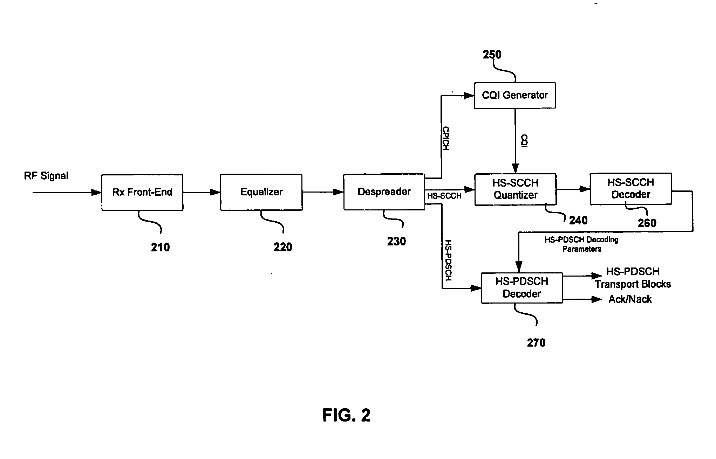

FIG.2 is a block diagram illustrating an exemplary HSDPA receiver, in accordance with an embodiment of the invention. Referring to FIG. 2, there is shown a Rx Front-End 210, an equalizer 220, a de-spreader 230, a HS-SCCH quantizer 240, a HS-SCCH decoder 250, a CQI generator 260, and a HS-PDSCH decoder 270.

The Rx front-end 210 may comprise suitable logic, circuitry, and/or code that may enable processing of received radio frequency (RF) signals. The Rx front-end 210 may enable conversion of a received RF signal to a baseband signal components. Various embodiments of the invention may enable an analog-to-digital conversion of the baseband signal components in the Rx front-end 210. The invention may not be limited in this regard, and analog-to-digital conversion may occur external to the Rx front-end 210. Notwithstanding, the digital baseband signal may be processed via, for example, an automatic gain control (AGC) loop within the Rx front-end 210. This may enable the power of the received RF signal to UE 120 to remain within a proper dynamic range of the UE 120.

The equalizer 220 may comprise suitable logic circuitry and/or code that may enable interference suppression and compensation for some radio impairments. The equalizer 220 may enable restoring the orthogonality of the codes in the received HSDPA signals. The equalizer 220 may be implemented as, for example, a time domain block equalizer or a frequency domain block equalizer to support various HSDPA requirements such as the ability to operate and perform well in mobility scenarios.

The de-spreader 230 may comprise suitable logic circuitry and/or code that may be enabled to generate physical channel specific symbols for various physical channels such as, for example, HS-SCCH, HS-PDSCH, and CPICH (Common Pilot Channel), by using channel specific codes such as a scrambling code and a set of channelization codes. The de-spreader 230 may comprise a bank of de-spreaders that may be operable to process multiple physical channels such as HS-SCCH, HS-PDSCH, and CPICH in parallel resulting in various physical channel specific outputs. For example, the CPICH symbols may be forwarded to the CQI generator 260 to be used for generating a CQI report, while the HS-SCCH symbols and the HS- PDSCH symbols may be passed to the HS-SCCH decoder 260 and the HS- PDSCH decoder 270 for HS-SCCH decoding and HS-PDSCH decoding, respectively.

The HS-SCCH quantizer 240 may comprise suitable logic circuitry and/or code that may be enabled to change the soft bit precision of the received HS-SCCH data. The HS-SCCH quantizer 240 may be configured to reduce the soft bit precision of the received HS-SCCH data in order to reduce the complexity of HS-SCCH decoding. In this regard, for example, to avoid unnecessary system-degradation due to quantization errors, the HS-SCCH quantizer 240 may be operable to adaptively adjust quantization step sizes based on the channel quality information. In accordance with various embodiments of the invention, a preferred soft bit precision may be determined for decoding the HS-SCCH. A quantization geometry for the preferred soft bit precision may also be determined based on the channel quality condition, which is indicated by the CQI value. Accordingly, the quantization step size for the channel quality condition specified by the CQI value is determined. The received HS-SCCH data may be truncated/quantized by using the determined quantization step size, and may be communicated to the HS-SCCH decoder 260 for HS-SCCH decoding.

The CQI generator 250 may comprise suitable logic, circuitry, and/or code that may be operable to provide channel quality information indicated by a channel quality indicator (CQI). The CQI may be determined based on an estimated signal-to-noise ratio (SNR) for each transmission time interval (TTI). The SNR for a particular modulation type may be derived from the common pilot channel (CPICH) symbols from the de-spreader 230. Different techniques for SNR estimation may be applied by balancing the trade-off between the quality of the estimate and complexity of the estimation algorithm. Moreover, a sliding window technique may be applied to derive a reliable average CQI value. The derived average CQI from the CQI generator 250 may be forwarded to the HS-SCCH quantizer 240 to be used for selecting quantization steps for HS-SCCH.

The HS-SCCH decoder 260 may comprise suitable logic, circuitry, and/or code that may enable mapping the incoming HS-SCCH data from the de-spreader 230 into an estimated set of transmitted bits from the base station 110. The output of the HS-SCCH decoder 260 may provide control signals, for the HS-PDSCH, such as the number of codes in the HSPDSCH, new data indicator, and modulation type (QPSK or 16QAM).

The HS-PDSCH decoder 270 may comprise suitable logic, circuitry, and/or code that may enable conversion of the incoming HS-PDSCH data from the de-spreader 230 into an estimated set of transmitted bits from the base station 110. Hybrid Automatic ReQuest (HARQ) and Turbo decoding algorithm may be used for the estimation. The control information such as the number of codes in the HS_PDSCH, new data indicator, and modulation type (QPSK or 16QAM) to the HS-PDSCH decoding are fed from the output of the HS-SCCH decoder 260. The HS-PDSCH decoder 270 may output HS-DSCH transport data blocks and the feedback information such as, for example, the packet retransmission information and/or channel quality information. The feedback information are communicated to the base station 110 for packet retransmission and transmission parameter selection. For example, based on received feedback information such as a CQI report from the UE 120, the base station 110 may select a set of transmission parameters such as modulation type and coding rate for a subsequent transmission to the UE 120.

In operation, the Rx front-end 210 of the UE 120 may enable receiving a RF transmission signal via HSDPA. The Rx front-end 210 may be enabled to process the received RF signal to accommodate the dynamic range of the received RF signal. The output of the Rx front-end 210 may be forwarded to the equalizer 220. Various algorithms such as minimum-mean-square-error method may be used in the equalizer 220 to suppress interferences and compensate radio impairments in the received RF signal. The output of the equalizer 220 may be communicated to the de-spreader 230. The de-spreader 230 may generate various physical channel specific symbols (soft data) such as, for example, HS-SCCH symbols, HS-PDSCH symbols, and CPICH symbols. The physical channel specific symbols such as the CPICH symbols may be communicated to the CQI generator 250 to generate CQI information. The HS-SCCH data are forwarded to the HS-SCCH quantizer 240 for HS-SCCH data quantization, where it may be utilized to reduce the complexity of the HS-SCCH decoding. The quantization step sizes, indicated by the combination of soft bit precisions and associated quantization geometry, of the HS-SCCH quantizer 240 may be adaptively adjusted based on channel quality information. The channel quality information may be indicated by the CQI value, which may be generated by the CQI generator 250. The quantized HS-SCCH data from the HS-SCCH quantizer 240 may be communicated to the HS-SCCH decoder 260. The HS-SCCH decoder 260 may generate various control signals for HS-PDSCH decoding and for example, may determine the number of codes in the HS-PDSCH and a modulation type (QPSK or 16QAM) of the data to be decoded. The HS-PDSCH 270 may perform the HARQ and channel decoding process over the HS-PDSCH data from the de-spreader 230. The HS-PDSCH decoder 270 may output HS-DSCH transport data blocks and the ACK/NACK signal to feedback to the base station 110 for packet retransmission, for example.

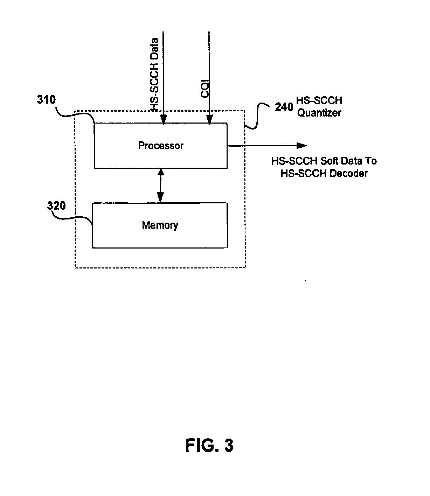

FIG.3 is a block diagram illustrating an exemplary HS-SCCH quantizer, in accordance with an embodiment of the invention. Referring to FIG. 3, there is shown a HS-SCCH quantizer 240 comprising a processor 310 and a memory 320.

The processor 310 may comprise suitable logic, circuitry and/or code that may be enabled to truncate/quantize the HS-SCCH data from the de-spreader 230. The quantization step size may be adaptively adjusted for a selected soft bit precision based on the CQI value. The processor 310 may be configured to support various soft bit precisions such as, for example, 4 bit or 6 bits, for the HS-SCCH quantization. Depending on the type of the HS-SCCH decoder 260 such as a 4 bits Viterbi decoder, the selection of the quantization geometry from most significant bits to least significant bits may result in a performance difference in the HS-SCCH decoder 260. The selection of the quantization geometry may indicate implicitly the true value of the quantization step size. However, for a 6 bits Viterbi decoder, the HS-SCCH decoder 260 may perform about the same for the selection of quantization geometry from most significant bits to least significant bits.

In various embodiments of the invention, to lower the complexity of the HS-SCCH quantizer 240, the processor 310 may select a quantization step size information by using a look-up table comprising the mappings between average CQI and quantization geometry indicated by soft bit precisions. The look-up table may be generated via, for example, lab simulation and/or field tests, and may be pre-loaded to the memory 320.

The memory 320 may comprise suitable logic, circuitry, and/or code that may enable storing of information such as executable instructions and data that may be utilized by the processor 310. The executable instructions may comprise algorithms that may enable choosing a soft bit precision and associated quantization geometry based on a particular average CQI. The data may comprise the determined quantization step size information such as the preferred soft bit precision and quantization geometry to be used for HS-SCCH data quantization. The memory 320 may be used to store the look-up table for CQI to quantization geometry mapping. The memory 320 may comprise RAM, ROM, low latency nonvolatile memory such as flash memory and/or other suitable electronic data storage.

In operation, the HS-SCCH quantizer 240 may be enabled to collect channel quality information such as average CQI information for adaptively quantizing the received HS-SCCH data from the de-spreader 230. The processor 310 may chose quantization step size information, which may be indicated by various preferred soft bit precisions for the HS-SCCH decoder 260 and associated quantization geometry, via various algorithms based on the collected channel quality information. The processor 310 may select quantization step sizes via a look-up table, which may comprise the mappings between CQI and various sets of soft bit precisions together with associated quantization geometry stored in the memory 320.

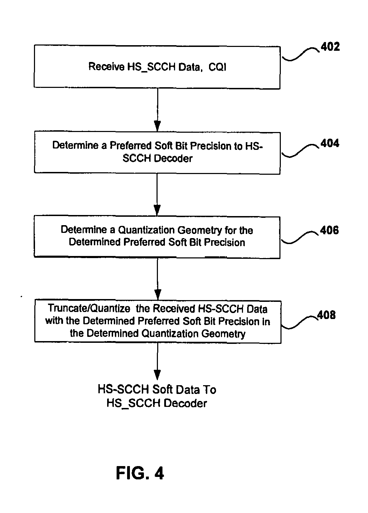

FIG. 4 is a flow chart illustrating exemplary quantization of received HS-SCCH data with adaptive HS-SCCH quantization step sizes based on CQI information, in accordance with an embodiment of the invention. Referring to FIG. 4, the exemplary steps may begin with step 402, where the processor 310 of the HS-SCCH quantizer 240 may receive HS-SCCH data communicated from the outputs of the de-spreader 230 and the CQI from the CQI generator 250, respectively. In step 404, the processor 310 of the HS-SCCH quantizer 240 may determine a preferred soft bit precision to the HS-SCCH decoder 260 based on the average CQI. In step 406, the quantization geometry for the determined preferred soft bit precision may be determined based on the average CQI. In step 408, the received HS-SCCH data may be quantized by truncating a number of consecutive bits, which may be equal to the determined preferred soft bit precision, in the determined quantization geometry. The resulted outputs may be forwarded to the HS-SCCH decoder 260 for HS-SCCH decoding.

Aspects of a method and system for adaptive quantization steps for HS-SCCH decoding using average CQI are provided. In accordance with various embodiments of the invention, the Rx front-end 210 of the UE 120 may enable receiving a RF transmission signal via HSDPA. The received signal may comprise various physical channel specific signals such as, for example, one or more HS-SCCH signals, a HS-PDSCH signal, and a CPICH signal. The HS-SCCH quantizer 240 may enable determining a quantization step for quantizing the received HS-SCCH signal based on the channel quality information, indicated by the CQI value from the CQI generator 250, before proceeding for HS-SCCH decoding. The CQI value may be generated at the CQI generator 250 used for the HS-PDSCH signal.

The HS-SCCH quantization information may be indicated by a preferred soft bit precision for decoding the received HS-SCCH signal and associated quantization geometry for the given preferred soft bit precision. The preferred soft bit precision and associated quantization geometry may be determined by the processor 310 of the HS-SCCH quantizer 240 based on the CQI information from the CQI generator 250. The HS-SCCH quantizer 240 may be enabled to truncate the received HS-SCCH signal with the determined soft bit precision in the determined quantization geometry as described with respect to FIG. 4. In one embodiment of the invention, to lower the complexity of the HS-SCCH quantizer 240, the processor 310 may be operable to select a quantization step size by using a look-up table comprising the mappings between CQI and quantization step sizes indicated by soft bit precisions and quantization geometry. The look-up table may be stored in the memory 320.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for adaptive quantization steps for HS-SCCH decoding using average CQI.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing signals in a communication system, the method comprising:
receiving a wireless signal and a corresponding control signal;
determining a quantization step for said control signal based on channel quality information for said wireless signal; and
quantizing said control signal based on said determination prior to decoding said control signal.

2. The method according to claim 1, wherein said received wireless signal comprises a High-Speed Downlink Packet Access (HSDPA) signal.

3. The method according to claim 1, wherein said received wireless signal comprises a high-speed physical downlink-shared channel (HS-PDSCH) signal and said control signal comprises a high-speed shared control channel (HS-SCCH) signal.

4. The method according to claim 1, wherein said channel quality information specifies a channel quality indicator (CQI) value for said received wireless signal.

5. The method according to claim 1, comprising determining a soft bit precision for said control signal based on said channel quality information.

6. The method according to claim 5, comprising determining a quantization geometry for said determined soft bit precision based on said channel quality information.

7. A system for signal processing, the system comprising:
one or more circuits operable to receive a wireless signal and a corresponding control signal;
said one or more circuits operable to determine a quantization step for said control signal based on channel quality information for said wireless signal; and
said one or more circuits operable to quantize said control signal based on said determination prior to decoding said control signal.

8. The system according to claim 7, wherein said received wireless signal comprises a High-Speed Downlink Packet Access (HSDPA) signal.

9. The system according to claim 7, wherein said received wireless signal comprises a high-speed physical downlink-shared channel (HS-PDSCH) signal and said control signal comprises a high-speed shared control channel (HS-SCCH) signal.

10. The system according to claim 7, wherein said channel quality information specifies a channel quality indicator (CQI) value for said received wireless signal.
